Europäisches Patentamt

(19) European Patent Office

Office européen des brevets

(11) Publication number: **0 012 757**
**B1**

(12) **EUROPEAN PATENT SPECIFICATION**

(45) Date of publication of patent specification: **11.01.84**

(51) Int. Cl.³: **F 24 D 11/00, F 24 J 3/02, B 65 D 90/06**

(21) Application number: **79900305.8**

(22) Date of filing: **20.03.79**

(86) International application number:
**PCT/SE79/00063**

(87) International publication number:
**WO 79/00806 18.10.79 Gazette 79/21**

(54) **A METHOD OF STORING THERMAL ENERGY IN A GROUND STORAGE DEVICE.**

(30) Priority: **21.03.78 SE 7803251**

(43) Date of publication of application:
**09.07.80 Bulletin 80/14**

(45) Publication of the grant of the patent:
**11.01.84 Bulletin 84/2**

(84) Designated Contracting States:
**FR**

(56) References cited:
**CH - A - 232 847**
**DE - A - 2 611 818**
**DE - A - 2 657 244**
**LU - A - 78 416**
**SE - B - 399 761**
**SE - B - 400 631**

(73) Proprietor: **SUNROC ENERGY KB**
**Box 4179**
**S-20313 Malmö 4 (SE)**

(72) Inventor: **PLATELL, Ove**
**Tilskogsvägen 15**
**S-190 30 Sigtuna (SE)**
Inventor: **WIKSTRÖM, Hans**
**Adö, S-190 51 Bro**
**Adö, S-19051 Bro (SE)**
Inventor: **Lilliehöök, Folke**
**Starvägen 4**
**S-230 10 Skanör (SE)**

(74) Representative: **Bert, Emmanuel et al,**
**Cabinet Bert, de Keravenant & Herrburger 115,**
**Boulevard Haussmann**
**F-75008 Paris (FR)**

Courier Press, Leamington Spa, England.

## A method of storing thermal energy in a ground storage device

The present invention relates to a method of storing thermal energy in ground storage devices of large volume which includes a ground body having passages for passing water in a circuit which includes said passages and to which external heat-absorbing and heat-emitting means are connected.

An example of such storage of thermal energy is given in LU—A—78 416. The heat-absorbing device primarily considered is a solar energy collector, by means of which thermal energy can be stored during the warmer periods of the year, to be then taken out during the colder periods. As disclosed in the description of the said Swedish Patent Application, thermal energy must be charged to the device over several years before the storage device can be used to the fullest extent with respect to its economic yield, despite the fact that the ground storage need only be heated to a temperature moderately above the ground temperature, which may be 8°C, for example.

Temporary solar energy collectors or special energy sources are required for a number of years to effect this initial heating of the storage device, which must be considered to constitute an additional investment for ensuring that the storage device can be utilized efficiently within a reasonable period of time.

The same circumstances prevail in the arrangement of other, similar, large ground storage devices. For reasons of an economic and practical nature, there is a limit to the size and costs that heat-absorbing devices intended for initially heating ground storage devices and maintaining the level of said heat may have, in order to reduce the preparatory time or to increase the capacity of such devices.

From the specification to German Patent 2 611 818 is also known a method of capturing and storing thermal energy comprising surface heated pools.

An object of the present invention is to provide a solution to the above mentioned problem such as to enable a large quantity of heat of limited temperature to be supplied to a ground storage device of the kind described over short periods during the summertime at relatively low costs.

This object is achieved by means of the invention, in accordance which the heat-absorbing device has the form of a large natural water mass, such as lakes, sea-inlets, creeks, rivers, canals etc., having a surface exposed to the sun, water of a given minimum temperature being charged from said water mass through the passages of said ground storage device and to a free outlet until, at latest, temperature equilibrium is reached between the water charged to said ground storage device and said heat absorbing means. In principle, this type of heat-absorbing device is also a solar energy collector, although it has integrated factor, insomuch as—subsequent to a fair delay during spring—it is active twentyfour hours a day for into the autumn months with a temperature of from 18 to 22°C. By applying different, simple methods, the water of such natural water masses can be heated to much higher temperatures, e.g. by covering part of the surface of such a water-mass with a layer of heat-insulating material and supplementing said layer with means for heating the water therebeneath by known solar-energy collecting systems.

Thus, by means of the invention, the initial heating of a ground heat-storage device can be accomplished rapidly and cheaply, and the temperature of said device maintained during the warmer periods of the year in a very efficient and economic manner. The only limitation of the initial heating source used in accordance with the invention vis-à-vis a more conventional type of solar energy collector is the temperature, which is normally limited. This has small importance, however, for initial-heating purposes, and is of no importance at all when the ground heat-storage device is to be used in areas where only relatively low temperatures are required, i.e. normally water-temperatures of up to 15—20°C in said device. As an example of such areas can be mentioned roads, sidewalks, precincts, football pitches which it is desired to keep dry and free from snow, and the heating of buildings sufficiently to protect against frost. The temperatures achieved are also sufficient to improve the cultivation of crops, algas etc., during the cold periods.

In accordance with one embodiment of the invention, the drop of a water-course, forming part of the water-mass, or the difference in level between said water-mass and said device is used for improving the transport of heated water to said device, thereby obviating the need of pumps.

So that the invention will be more readily understood and optical features thereof made apparent, an exemplary embodiment of the invention will now be described with reference to the accompanying schematic drawing.

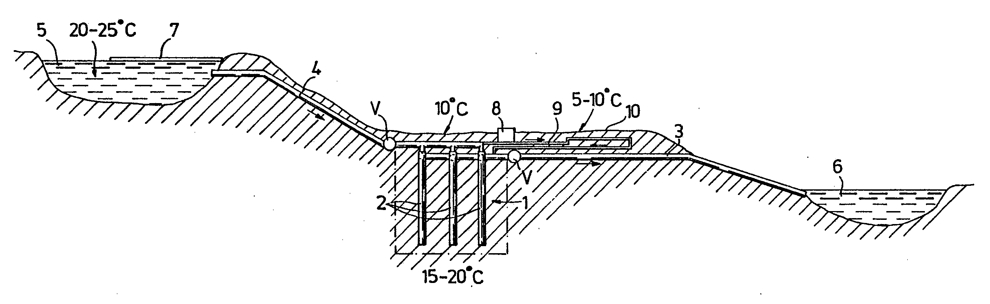

In the single figure of the drawing there is illustrated a ground heat-storage device 1 of the kind described and illustrated in LU—A—78 416, said device including a plurality of vertically extending mutually parallel pipes 2 which are connected to a common outlet line 3. Each of the pipes 2 has extending coaxially therein a respective inner pipe which is open at the bottom thereof, said inner pipes being connected in parallel to an inlet line 4. The inlet line communicates with a lake 5 which is located at a higher level than the device 1, while the outlet line 3 communicates with a lake 6 located at a lower level than said device. The flow of water through the device 1 is regulated by means of valves (not referenced), which may be thermostat controlled, and no pumps are required. If pumps are used, however, it will be possible, of course, to move the water to and from the lakes 5 and 6. It is also possible to connect the lines 3 and 4 to a water-course located between the lakes 5 and 6.

If the temperature of the water in lake 5 is too low, part of the surface of the lake can be covered with a buoyant layer 7 of insulating material, such as a plastics material optionally supplemented with auxiliary means for heating the water by means of solar energy. Such means are well known.

The ground heat-storage device may be arranged, for example, beneath the surface of a football pitch, thereby to enable the surface of the pitch to be kept dry from ice by heat derived directly from said device, at least during a greater part of the winter months. The pitch can thus be used much earlier in the spring than is normally the case.

As shown in the figure, water may be pumped, by means of a pump 8, around a circuit which includes the device 1 and a footpath 10.

### Claims

1. A method of storing thermal energy in ground storage devices of large volume, which includes a ground body having passages for passing water in a circuit which includes said passages and to which external heat-absorbing and heat-emitting means are connected characterized in that the heat-absorbing means has the form of a large natural water-mass, having a surface exposed to the sun and that water of a given minimum temperature is charged from said water-mass through the passages of said ground storage device and to a free outlet until, at latest, temperature equilibrium is reached between the water charged to said ground storage device and said heat-absorbing means.

2. A method according to Claim 1 characterized in that the drop of a water-course forming part of the water-mass, or the difference in level between said water-mass and said device is used for improving the transport of heated water to said ground storage device.

### Revendications

1). Procédé d'accumulation d'énergie thermique dans des dispositifs d'accumulation dans le sol, de grande capacité, comprenant un corps dans le sol avec des passages pour l'eau dans un circuit comprenant les passages, et auquel sont reliés un moyen d'émission de chaleur et un moyen d'absorption de chaleur externes, caractérisé en ce que le moyen d'absorption de chaleur se présente sous la forme d'une grande masse d'eau naturelle ayant une surface exposée au soleil et en ce que l'eau à une température minimale donnée est chargée par la masse d'eau à travers les passages du dispositif d'accumulation dans le sol et vers une sortie libre jusqu'à ce qu'au moins la température d'équilibre soit atteinte entre l'eau chargée dans le dispositif d'accumulation dans le sol et le moyen d'absorption de chaleur.

2). Procédé selon la revendication 1, caractérisé en ce que la chute d'un cours d'eau faisant partie de la masse d'eau ou la différence de niveau entre la masse d'eau et le dispositif sont utilisées pour améliorer le transfert de l'eau chaude dans le dispositif d'accumulation dans le sol.

### Patentansprüche

1. Verfahren zum Speichern von Wärmeenergie in einem Erdspeicher mit grossem Volumen, mit einem Erdkörper, der Kanäle besitzt, um Wasser länge einer Leitung zu transportieren, welche die Kanäle enthält, und die an äussere Wärmeabsorptionsmittel und Wärmeemissionsmittel angeschlossen ist, dadurch gekennzeichnet, dass die Wärmeabsorptionsmittel durch eine grosse natürliche Wassermenge gebildet sind, deren Oberfläche der Sonne ausgesetzt ist, und dass Wasser einer gegebenen minimalen Temperatur von der Wassermenge solange durch die Kanäle des Erdspeichers einem freien Auslass zugeführt wird, bis schliesslich ein Temperaturgleichgewicht zwischen dem dem Erdspeicher zugeführten Wasser und den Wärmeabsorptionsmittel erreicht ist.

2. Verfahren nach Anspruch 1, dadurch gekennzeichnet, dass das Gefälle eines Wasserlaufes, der Teil der Wassermenge ist, oder die Höhendifferenz zwischen der Wassermenge und dem Erdspeicher verwendet wird, um die Zufuhr von erwärmtem Wasser zu dem Erdspeicher zu verbessern.